Europäisches Patentamt

European Patent Office

Office européen des brevets

(19)

(11) **EP 1 196 642 B1**

(12) **EUROPÄISCHE PATENTSCHRIFT**

(45) Veröffentlichungstag und Bekanntmachung des
Hinweises auf die Patenterteilung:
**27.04.2005 Patentblatt 2005/17**

(51) Int Cl.[7]: **C21C 7/00**, C21C 5/00,
C22B 9/18, C22C 38/00

(21) Anmeldenummer: 01909756.7

(22) Anmeldetag: **15.02.2001**

(86) Internationale Anmeldenummer:
**PCT/EP2001/001671**

(87) Internationale Veröffentlichungsnummer:
**WO 2001/068924 (20.09.2001 Gazette 2001/38)**

(54) **VERFAHREN ZUR KONTROLLE UND EINSTELLUNG DER KONZENTRATION EINER
GASKOMPONENTE IN EINER SCHMELZE UND VORRICHTUNG ZU DESSEN DURCHFÜHRUNG**

METHOD FOR CONTROLLING AND ADJUSTING THE CONCENTRATION OF A GAS
COMPONENT IN A MELT AND A DEVICE FOR CARRYING OUT THE SAME

PROCEDE DE CONTROLE ET D'AJUSTEMENT DE LA CONCENTRATION D'UN COMPOSANT
GAZEUX DANS UNE MASSE EN FUSION, ET DISPOSITIF POUR LA MISE EN OEUVRE DE CE
PROCEDE

(84) Benannte Vertragsstaaten:
**AT BE CH CY DE DK ES FI FR GB GR IE IT LI LU
MC NL PT SE TR**

(30) Priorität: **16.03.2000 DE 10012837**

(43) Veröffentlichungstag der Anmeldung:
**17.04.2002 Patentblatt 2002/16**

(73) Patentinhaber: **Energietechnik Essen GmbH
45143 Essen (DE)**

(72) Erfinder:
• **FEICHTINGER, Heinrich
CH-8128 Hinteregg (CH)**

• **HUCKLENBROICH, Irina
44879 Bochum (DE)**
• **STEIN, Gerald
45133 Essen (DE)**

(74) Vertreter: **Simons, Johannes, Dipl.-Ing. et al
COHAUSZ & FLORACK
Patent- und Rechtsanwälte
Bleichstrasse 14
40211 Düsseldorf (DE)**

(56) Entgegenhaltungen:
**EP-A- 0 443 489       DE-A- 2 528 588
DE-A- 3 426 086**

Anmerkung: Innerhalb von neun Monaten nach der Bekanntmachung des Hinweises auf die Erteilung des europäischen
Patents kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr
entrichtet worden ist. (Art. 99(1) Europäisches Patentübereinkommen).

## Beschreibung

Die Erfindung betrifft ein Verfahren zur Erzeugung von Metallegierungen mit einer gewünschten Konzentration einer für ihre Eigenschaften relevanten Gaskomponente in einem nicht völlig gasdichten Behälter und eine Vorrichtung zur Durchführung dieses Verfahrens. Insbesondere betrifft die Erfindung einen Umschmelzprozeß zur Erzeugung eines Stahls mit einem hohen und exakt einzustellenden Stickstoffgehalt.

Seit geraumer Zeit besteht großes Interesse am Einsatz von stickstoffhaltigen Stählen. Zu diesen Werkstoffen gehören z.B. rostfreie austenitische Legierungen, welche neben Chrom und Mangan gelösten Stickstoff in Mengen von 0,5 bis 1,5 Masse-% enthalten. Solche Stähle besitzen eine ungewöhnliche Kombination von höchster Festigkeit und Zähigkeit und zusätzlich einen außerordentlich hohen Korrosionswiderstand. So werden z.B. aus einer von der Anmelderin unter der Handelsbezeichnung "P900" angebotenen, 18 % Chrom, 18 % Mangan sowie 0,6 - 1,2 Masse-% Stickstoff aufweisenden Stahllegierung Kappenringe geschmiedet, welche den hohen technischen Anforderungen in Stromgeneratoren von Großkraftwerken genügen.

Eine anderes Beispiel für stickstoffhaltige Stähle sind neue martensitische Werkzeugstähle, welche neben einem erhöhten gelösten Stickstoffgehalt auch Hartphasen in Form von ausgeschiedenen Nitriden und/oder Carbonitriden enthalten. Diese Werkstoffe verbinden hohe Härte und Verschleißfestigkeit mit einem außergewöhnlichen Korrosionswiderstand. So hat sich z.B. eine ebenfalls von der Anmelderin unter der Marke "Cronidur" angebotene Legierung der Firma VSG Energie- und Schmiedetechnik mit 15 % Chrom, 1 % Molybdän, 0,3 % Kohlenstoff sowie 0.38 % Stickstoff als besonders widerstandsfähig gegen den Korrosionsverschleiß bei den Lagern von Flugzeugtriebwerken erwiesen.

In den erwähnten Anwendungsfällen stellt Stickstoff das wesentliche Element der Legierung dar, durch welche die Eigenschaften des jeweiligen Werkstoffs entscheidend bestimmt werden. Schon geringe Konzentrationsabweichungen können zu einer dramatischen Verschlechterung der positiven Eigenschaften, z.B. in Bezug auf die Zähigkeit und den Korrosionswiderstand, führen. Aus diesem Grunde ist die genaue Kontrolle des Stickstoffgehalts solcher Stähle bei der Herstellung der Legierungen von größter Bedeutung.

In der Praxis müssen Stähle der in Rede stehenden Art häufig unter erhöhtem Druck erschmolzen werden, um die erforderlichen Drücke erreichen zu können. So ist einerseits der Partialdruck des Stickstoffs von besonderer Bedeutung. Er bewirkt, daß die benötigte Stickstoffmenge in der Schmelze gelöst wird. Andererseits verhindert der Gesamtdruck insbesondere bei Legierungen, bei denen die Löslichkeit des Stickstoffs einhergehend mit der Erstarrung stark abnimmt, die Entstehung von Gasporen bei der Erstarrung, wenn er oberhalb des Partialdrucks des Stickstoffs liegt.

Aufgrund der Notwendigkeit, die in Rede stehenden Stähle in einem geschlossenen Druckbehälter zu erschmelzen, kann eine üblicherweise durchgeführte Prozeßkontrolle mit wiederholter Probenentnahme aus dem Metallbad und anschließender Gasanalyse nicht durchgeführt werden.

Beim unter erhöhtem Druck durchgeführten Gegendruckverfahren nach Rashav (Rashev T.-. Big-Size Steel Bath Process for Large Scale Industrial Production of High Nitrogen Steels, Proceedings of 3rd Int. Conference HNS 93, Kiev, Ukraine, 14. - 16.9.1993) wird eine Stahlcharge in einem Druckbehälter induktiv erschmolzen und anschließend unter Beibehaltung des Drucks in eine Kokille oder eine Form abgegossen. Dabei ist die Schmelze dem erhöhten Stickstoffdruck über längere Zeiten ausgesetzt, so daß der gewünschte Stickstoffgehalt durch einen entsprechend dem Sieverts-Gesetz für die Arbeitstemperatur gewählten Stickstoffpartialdruck im Gleichgewicht eingestellt werden kann. Problematisch ist in diesem Zusammenhang jedoch, daß der Diffusionskoeffizient von Stickstoff in der Metallphase im Vergleich zu anderen Gasen verhältnismäßig niedrig ist. Daher stellt sich das angestrebte Gleichgewicht in vielen Fällen erst nach verhältnismäßig langen Behandlungszeiten ein. Die damit einhergehenden langen Wartezeiten machen den Produktionsprozeß unwirtschaftlich.

Eine wichtige Rolle bei der Erzeugung hochstickstoffhaltiger Legierung spielen Umschmelzverfahren, insbesondere der Elektroschlackenumschmelzprozess. Bei diesen Verfahren wird eine an Stickstoff ärmere Legierung in einem ersten Schritt mit den üblichen Mitteln der Schmelzmetallurgie, z.B. unter Einsatz der Pfannenmetallurgie unter Normaldruck hergestellt und zu einer Elektrode vergossen. Diese Elektrode dient als Ausgangsmaterial für einen zweiten Verfahrensschritt, in dem diese Elektrode unter erhöhtem Druck umgeschmolzen wird. Neben der üblicherweise im Zuge des Umschmelzens erreichten Erhöhung des Reinheitsgrades bietet der Umschmelzprozess die Möglichkeit, dem Grundmaterial der Elektrode Stickstoff zuzuführen. Dabei dient die Schlacke sowohl als Heizleiter als auch als raffinierender Reaktionspartner. Eine dritte Funktion der die Schmelze während des Umschmelzens vollständig bedeckenden Schlacke besteht beim bekannten Zulegieren von Stickstoff darin, den Stickstoff der Schmelze zuzubringen.

Nach dem Stand der Technik erfolgt das Zulegieren des Stickstoffes bevorzugt durch Zugabe stickstoffhaltiger Stoffe, welche als Pulver- oder Granulatgemisch auf die Schlacke aufgebracht werden. Ein Problem besteht dabei jedoch darin, daß bei einem solchen Vorgehen eine exakte Zulegierung von Stickstoff nach dem Stand der Technik nicht gewährleistet werden kann.

Um dieses Problem zu beseitigen, ist beispielsweise in der US PS 4,027,720 eine Komposit-Elektrode vorgeschlagen worden, bei der eine stickstoffreiche Legierung als Kern und eine stickstoffarme Legierung als Mantel verwendet wird. Nach dem Umschmelzprozess soll auf diese Weise ein Block erhalten werden, der aus einer Legierung mit dem gewünschten Stickstoffgehalt besteht. In der Praxis hat sich jedoch gezeigt, daß dieses teure und aufwendige Verfahren oft zu Blöcken mit inhomogener Zusammensetzung führt.

Die Aufgabe der Erfindung besteht darin, ausgehend von dem voranstehend erläuterten Stand der Technik ein Verfahren der eingangs genannten Art und eine zur Durchführung eines solchen Verfahrens besonders geeignte Vorrichtung zu schaffen, welche die exakte Zulegierung einer an sich gasförmigen Legierungskomponente zu einer in einem Druckbehälter unter Überdruck gesetzten Stahllegierung ermöglichen.

Diese Aufgabe wird bei einem Verfahren zum Erzeugen einer Metallegierung, bei dem der Metallegierung in einem Behälter unter Überdruck ein bestimmter, gewünschter Gehalt an einer im Normalzustand gasförmige Legierungskomponente zugeführt wird, gemäß der Erfindung gelöst, wobei folgende Schritte erfolgen :

- der in dem Behälter enthaltenen Atmosphäre werden die gasförmige Legierungskomponente und ein Inertgas in solchen Mengen zugegeben, daß in der Atmosphäre ein bestimmtes anfängliches Konzentrationsverhältnis zwischen der gasförmigen Legierungskomponente und dem Inertgas besteht,

- die zeitliche Veränderung des Gesamtdrucks, die zeitliche Veränderung der Konzentration des Inertgases und der gasförmigen Legierungskomponente in der im Behälter enthaltenen Atmosphäre sowie die zeitliche Veränderung der mittleren Gastemperatur der in dem Behälter enthaltenen Atmosphäre werden ermittelt,

- unter Berücksichtigung des jeweiligen Gesamtdrucks, der jeweiligen Konzentration des Inertgases, der jeweiligen Konzentration der gasförmigen Legierungskomponente sowie der jeweiligen Gastemperatur wird der in Folge von Undichtigkeiten des Behälters eintretende Inertgas-Massenverlust der im Behälter enthaltenen Atmosphäre ermittelt,

- anhand des anfänglichen Konzentrationsverhältnisses wird ein theoretischer Massenverlust der Atmosphäre an der gasförmigen Legierungskomponente bestimmt , welcher sich aufgrund der Undichtigkeiten einstellt,

- anhand eines Vergleichs des theoretischen Massenverlusts mit dem tatsächlichen Massenverlust, welcher unter Berücksichtigung der jeweiligen tatsächlichen Konzentration der gasförmigen Komponente in der im Behälter enthaltenen Atmosphäre festgestellt wird, wird der Massenanteil der gasförmigen Komponente ermittelt , der in die Metallegierung übergegangen ist, und

- der in dem Behälter enthaltenen Atmosphäre wird unter Berücksichtigung des in die Metallegierung übergegangenen Massenanteils und der durch Undichtigkeiten verlorenen Massenverluste der gasförmigen Legierungskomponente diese Legierungskomponente so lange und in solchen Mengen zudosiert , daß nach Beendigung des Verfahrens die Metallegierung den gewünschten Gehalt an der gasförmigen Legierungskomponente besitzt.

Das erfindungsgemäße Verfahren gestattet es erstmals, den Stoffübergang einer für die Qualität einer Metallegierung relevanten Gaskomponente in das Metallbad während des Schmelz- oder Umschmelzprozesses in einem nicht völlig gasdichten Behälter laufend zu bestimmen. Auf diese Weise wird es möglich, mit hoher Präzision ein Material mit einer gewünschten Konzentration der relevanten gasförmigen Legierungskomponente zu erzeugen. Die hohe Genauigkeit, mit der der Übergang der gasförmigen Komponente in die Metallegierung bei Anwendung des erfindungsgemäßen Verfahrens gesteuert werden kann, ergibt eine gleichförmige, homogene Verteilung des in die Metallegierung aufgenommenen Legierungsbestandteils.

Bezogen auf das bevorzugte Anwendungsgebiet der Erfindung, nämlich die Erzeugung von hochgestickten Stählen, bei der ebenso bevorzugt das Druck-Elektroschlackenumschmelzverfahren eingesetzt wird, bedeutet dies unter anderem, daß ein entsprechend aus der Metallegierung erzeugter Block entlang seiner Längsachse ein gleichmäßiges Stickstoffkonzentrationsprofil aufweist. Dabei kann der Stickstoff - entsprechend der Permeabilität der Schlakke - auf Wunsch mit dem unter den Arbeitsbedingungen der Anlage maximal aus der Atmosphäre einbringbaren Stickstoff auflegiert werden. Auf diese Weise kann die häufig problematische Stickstoffzugabe über stickstoffhaltige feste Zusatzstoffe auf ein Minimum beschränkt werden oder völlig unterbleiben.

Das erfindungsgemäße Verfahren ist insbesondere für die Durchführung in einem nicht völlig gasdichten Behälter geeignet. Infolge der Größe und Komplexität solcher Behälter ist es in der Praxis nahezu unmöglich, eine gleichbleibende Dichtigkeit während des Betriebs zu gewährleisten. So besteht an jedem der zahlreichen für die Versorgung der Behälter benötigten Flansche, Ventile und Anschlüsse die Gefahr des Austretens von Gas. Indem gemäß der Erfindung die aus dem Behälter verlorengehenden Massenanteile des Inertgases und der relevanten gasförmigen Legierungskomponente erfaßt werden, kann eine exakte Bilanz des Werkstoffeintrags durchgeführt werden, der der Metallegierung zugeführt wird.

Ein erfindungsgemäßes Verfahren kann bei den verschiedensten elektrothermischen Druckschmelzverfahren eingesetzt werden, bei denen die Schmelze nach der Aufstickung in eine Kokille oder eine Form abgegossen wird. Es ist jedoch mit besonderen Vorteilen bei elektrothermischen Umschmelzverfahren anzuwenden, bei denen der Schmelzprozess mehr oder weniger fern vom Lösungsgleichgewicht des Stickstoffs zwischen Metall- und Gasphase abläuft.

Eine zur Durchführung des erfindungsgemäßen Verfahrens besonders geeignete Vorrichtung ist gemäß der Erfindung ausgebildet gemäß Anspruch 17. Die Vorrichtung ist mit einem Behälter zur Aufnahme einer Atmosphäre und einer Metallegierung unter Überdruck, mit einer Erwärmungseinrichtung, mittels der aus der Metallegierung eine Schmelze erzeugbar ist, mit einer Dosiereinrichtung zum Einbringen einer im Normalzustand gasförmigen Legierungskomponente in den Behälter, mit einer Dosiereinrichtung zum Einbringen eines Inertgases in den Behälter, mit einem Drucksensor zum Erfassen des Gesamtdrucks der in dem Behälter enthaltenen Atmosphäre, mit einem Temperatursensor zum Erfassen der Temperatur der Atmosphäre an mindestens einem Ort, mit einer Einrichtung zur Ermittlung der Konzentrationen des Inertgases und der gasförmigen Legierungskomponente in der im Behälter enthaltenen Atmosphäre, mit einer Auswerteinheit, welche den Gesamtdruck, die Temperatur der Atmosphäre und die Konzentrationen des Inertgases und der gasförmigen Legierungskomponente auswertet und mit einer Steuereinrichtung ausgestattet, welche die Dosierung des Inertgases und der gasförmigen Legierungskomponente in Abhängigkeit vom Ergebnis der Auswertung der Auswerteinrichtung steuert.

Vorteilhafte Ausgestaltungen des erfindungsgemäßen Verfahrens und der erfindungsgemäßen Vorrichtung sind in den abhängigen Ansprüchen angegeben und ergeben sich aus der nachfolgenden näheren Erläuterung von Ausführungsbeispielen. Es zeigen in schematischer Darstellung:

Fig. 1    eine Vorrichtung zur Kontrolle des Stickstoffübergangs bei der Erschmelzung von stickstoffhaltigen Legierungen in einem Druckinduktionsofen,

Fig. 2    eine weitere Vorrichtung zur Kontrolle des Stickstoffübergangs beim Umschmelzen von stickstoffhaltigen Legierungen in einer Druck-Elektroschlackenumschmelzanlage (DESU).

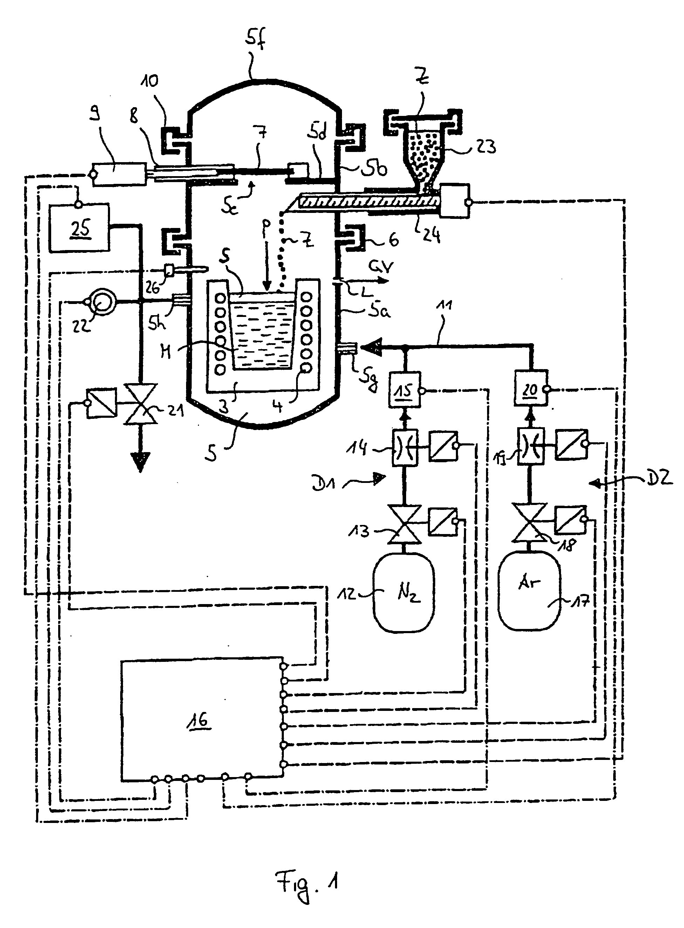

Fig. 1 zeigt ein Beispiel einer erfindungsgemäßen Vorrichtung in Kombination mit einem Druckinduktionsofen, wie er z.B. von Rashev beschrieben worden ist. Entsprechend dem "Gegendruck-Schmelzverfahren" von Rashev befindet sich dabei die flüssige Metallschmelze M in einem Induktionstiegel 3, welcher von einer Induktionsspule 4 beheizt wird.

Die Tiegelanordnung ist im unteren Teil 5a eines Druckbehälters 5 angeordnet, auf welchen über einen Flansch mittels eines Preßrings 6 der Mittelteil 5b des Druckbehälters 5 aufgesetzt ist. Dieser Mittelteil 5b enthält eine horizontal verlaufende Trennwand 5d, die eine zentrale Öffnung 5e besitzt. Zum druckfesten Verschließen dieser Öffnung 5e ist eine Ventilplatte 7 vorgesehen. Die Ventilplatte 7 wird ihrerseits über einen Bewegungsmechanismus 8 sowie einen elektrisch ansteuerbaren Aktuator 9 in Bewegung gesetzt. Auf das Mittelteil 5b des Druckbehälters 5 ist über einen Flansch mittels eines Preßrings 10 das Oberteil 5f des Druckbehälters 5 aufgesetzt.

Das Oberteil 5f kann für den Abguß z.B. durch eine in der Zeichnung nicht dargestellte druckfeste Abgußkammer ersetzt werden. In dieser befindet sich dann eine Kokille oder eine Gußform, welcher die Schmelze durch ein Steigrohr unter der Wirkung eines Druckgradienten zugeführt werden kann.

Der Druckbehälter 5 ist über einen Anschluß 5g und eine Verbindungsleitung 11 mit zwei Dosiereinrichtungen D1, D2 verbunden, über die der im Druckbehälter 5 enthaltenen Atmosphäre unterschiedliche Gase zugeführt werden. So dient die erste Dosiereinrichtung D1 zum Zudosieren von gasförmigem Stickstoff, während über die Dosiereinrichtung D2 Inertgas, beispielsweise Argon, in den Druckbehälter 5 geleitet wird.

Dazu umfaßt die erste Dosiereinrichtung D1 einen Druckspeicher 12, dessen Anschluß mittels eines steuerbaren Ventils 13 verschließbar ist, eine motorisch angetriebene Strömungsdrossel 14, über welche der aus dem Druckspeicher abströmende Volumenstrom regelbar ist, einen Massendurchflußmesser 15, welcher den in die Verbindungsleitung 11 einströmenden Stickstoff-Volumenstrom erfaßt und ein entsprechendes Meßsignal an eine Auswert- und Steuereinrichtung 16 liefert. Die Steuereingänge des Ventils 13 und der Strömungsdrossel 14 sind mit Steuerausgängen der Auswert- und Steuereinrichtung 16 verbunden. Sobald die gewünschte Stickstoffmenge zugeflossen ist, gibt die Auswert- und Steuereinrichtung 16 ein Signal zum Schließen des Ventils 13.

Die Dosiereinrichtung D2 ist in gleicher Weise aufgebaut. Sie umfaßt einen Druckspeicher 17, einen den Anschluß des Druckspeichers 17 ggf. verschließendes, steuerbares Ventil 18, eine motorisch angetriebene, steuerbare Strömungsdrossel 19 sowie einen Massendurchflußmesser 20, welcher wie der Massendurchflußmesser 15 mit der Auswert- und Steuereinrichtung 16 verbunden ist.

Über einen Anschluß 5h kann ein übermäßiger Druck durch Öffnen eines Ventils 21 aus dem Druckbehälter 5 abgeführt werden. Das Ventil 21 verhindert im Normalzustand ein Abströmen von Gas über den Anschluß 5h des Druckbehälters 5.

Eine Undichtigkeit, die an irgendeiner Stelle des Druckbehälters 5 oder einer der anderen druckführenden Komponenten der Vorrichtung auftreten kann, ist stellvertretend als Loch L in der Wandung des Druckbehälters 5 symbolisiert. Über das Loch L tritt eine Gasverlustströmung GV aus, welche zu einem Abfall des Drucks im Druckbehälter 5 führt.

Zum Erfassen eines Druckabfalls im Druckbehälter 5 ist eine Druckmesszelle 22 vorgesehen, die mit dem Anschluß 5h verbunden ist. Die Druckmesszelle 22 liefert das von ihr erzeugte Meßsignal ebenfalls an die Auswert- und Steuereinrichtung 16.

Der Schmelzprozess im Druckbehälter 5 wird unter einer Atmosphäre mit einem Stickstoffpartialdruck $P_{M2,soll}$ durchgeführt. Dieser entspricht dem zu erreichenden Sollwert der Sieverts-Konstanten $K_S$ für die Legierung bei Arbeitstemperatur:

$$(1) \qquad P_{N2,soll} = P_0 * \left( \frac{[\%N]_{soll}}{K_s} \right)^2$$

In Gleichung (1) entspricht die Sieverts-Konstante direkt der Stickstofflöslichkeit bei Standarddruck in Massenprozent. Stickstoff kann jedoch auch durch Zugabe von stickstoffhaltigen Zusatzstoffen Z aus einem Vorratsbehälter 23 über eine von einem Servomotor angetriebene Förderschnecke 24 oder einen anderen Fördermechanismus mit Schleusenfunktion in die Metallschmelze M eingegeben werden. Dabei wird der Zusatzstoff Z in der Regel als Granulat in den Druckbehälter 5 eingebracht, welches z.B. auch noch andere Legierungselemente sowie Desoxydations- und Entschwefelungsmittel enthalten kann. Diese zusätzliche Zulegierungsmöglichkeit für Stickstoff ist im Interesse der Verkürzung der Behandlungsdauer wichtig, falls die im Druckbehälter 5 enthaltene Schlacke S den Übergang des Stickstoffs von der im Druckbehälter 5 enthaltenen Atmosphäre in die flüssige Metallphase M in Richtung des Pfeil P behindert.

Anders als beim Stand der Technik, bei dem in einer Druckschmelzanlage zur Aufrechterhaltung des Drucks bei einer negativen Druckabweichung solange Gas zugespeist wird, bis der Arbeitsdruck wieder erreicht ist, wird bei der in Fig. 1 dargestellten Vorrichtung gemäß der Erfindung das Volumen des zugeführten Stickstoffs erfaßt, um eine Stickstoffbilanz der Anlage ermitteln zu können.

Dabei ist es grundsätzlich im Sinne der Erfindung auch möglich, ohne eine besondere Meßeinrichtung, wie beispielsweise die Durchflußmesser 15 bzw. 20, die zugegebene Menge von Stickstoff und Argon zu ermitteln. In einem solchen Fall sind bei dem in Fig. 1 dargestellten Beispiel nur die Ventile 13 bzw. 18 vorhanden. Im Fall einer kurzzeitigen Öffnung der Ventile 13 bzw. 18 gelangt direkt Stickstoff bzw. Argon in den Druckbehälter 5. Der dadurch hervorgerufene kurzzeitige Druckanstieg wird von Druckmesszelle 22 erfaßt. Bei Kenntnis des Behältervolumens $V_S$ und der mittleren Gastemperatur kann dann der Druckanstieg direkt in ein entsprechendes Zugabe-Normalvolumen von Stickstoff oder Argon umgerechnet werden. Nachteilig bei diesem Vorgehen ist allerdings, daß eine solche Arbeitsweise ungenau ist, da die Berechnung des zugegebenen Volumens durch das große Volumen der Anlage, die verhältnismäßig kleinen Druckänderungen sowie die Meßabweichung der Gastemperatur ungünstig beeinflußt wird.

Die zuzuführenden Mengen von Stickstoff und / oder Argon können aus der Änderung der Normalgasvolumina im Druckbehälter errechnet werden. Diese Änderungen manifestieren sich einerseits durch den Druckabfall ΔP und andererseits durch die entsprechenden Konzentrationsänderungen von Stickstoff und Argon im betrachteten Zeitintervall. Bei Kenntnis des Heißvolumens der Gasatmosphäre im Druckbehälter 5, d.h. unter Berücksichtigung des Innenvolumens $V_B$ des Behälters und der mittleren Gastemperatur T der Gasatmosphäre im Druckbehälter 5, können die Änderungen der Normalgasvolumina exakt nach einer realen Zustandsgleichung oder näherungsweise nach dem idealen Gasgesetz berechnet werden. So gilt beispielsweise in diesem Sinne für die Änderung des Normalgasvolumens des Stickstoffs innerhalb eines Zeitraums vom Zustand 1 zum Zustand 2,

$$(2) \qquad \Delta V_{N2} = (P_{N2,2} * \{\%N_2\}_2 - P_{N2,1} * \{\%N_2\}_1) * \frac{273}{100 * p_n * T}$$

Zur Bestimmung der Konzentrationen der Gaskomponenten ist der Druckbehälter über den Anschluss 5h zusätzlich mit einem Gasanalysator 25 verbunden. Im hier erläuterten Beispiel handelt es sich dabei um einen Prozessgaschromatographen in Kombination mit einem Gasprobenentnahmeventil. Der Gaschromatograph wird mit einer mit Molekularsieb gepackten Trennsäule sowie mit Helium als Trägergas betrieben, so daß sowohl Stickstoff als auch Argon über Integration der entsprechenden Peaks gemessen werden können. Wahlweise kann zusätzlich die Wasserstoffkonzentration aus dem Chromatogramm ermittelt werden.

Da man sich mit dem Stickstoff-Argon-Gemisch in einem nahezu binären Gassystem befindet, welches nur geringe Mengen von Drittgasen enthält, kann die Argonkonzentration auch näherungsweise aus der Stickstoffkonzentration durch Aufrechnung auf 100 % unter Berücksichtigung eines mittleren, empirisch bestimmten Korrekturfaktors berechnet werden. Dies ist thermodynamisch sinnvoll, weil nur der Stickstoffpartialdruck in starkem Maße die Stickstoffkonzentration im Metallbad beeinflussen kann.

Die Berechnung des geänderten Normalvolumens entsprechend Gleichung (2) setzt die Kenntnis der mittleren repräsentativen Gastemperatur voraus. Da die im Druckbehälter eingeschlossene Gasatmosphäre sowohl heiße Bereiche in der Nähe der Oberfläche der Schmelze S als auch kältere Bereiche im Strahlungsschatten besitzt, ist unter der mittleren Temperatur eine Mischtemperatur zu verstehen, welche dem korrekt gewichteten Temperatureinfluß aller Bereiche des Druckbehälters 5 entspricht.

Zur Ermittlung dieser mittleren Temperatur wird mittels eines Temperaturfühlers 26 beispielsweise an einem Ort in der Nähe der Verbindungsstelle zwischen dem unteren und dem mittleren Teil 5a bzw. 5b des Druckbehälters 5 die jeweilige Temperatur er.faßt und an die Auswert- und Steuereinrichtung 16 geleitet. Diese ermittelt aus der örtlich gemessenen Temperatur mittels einer empirisch ermittelten, die tatsächliche Temperaturverteilung innerhalb des Druckbehälters widerspiegelnden Korrekturfunktion die mittlere Temperatur der in dem Behälter 5 enthaltenen Gasatmosphäre.

Eine Alternative zur voranstehend erläuterten Ermittlung der mittleren Temperatur besteht darin, kurzzeitig ein zusätzliches Argonvolumen bekannter Größe in den Behälter einzulassen und den daraus resultierende Druckanstieg zu messen. Bei entsprechender Umstellung der verwendeten Gasgleichung, z.B. der näherungsweise dem idealen Gasgesetz entsprechenden Gleichung (2), kann daraus direkt die mittlere Gastemperatur errechnet werden. Bei dieser Vorgehensweise kann auf den Temperaturfühler 26 verzichtet werden.

Falls das Normalvolumen des Stickstoffs in einem gasdichten Behälter zwischen dem Zeitpunkt $t_1$ und dem Zeitpunkt $t_2$ abnimmt, so entspricht diese Änderung dem Stickstoffvolumen $\Delta V_{N2,Atm}$, welches durch Stoffübergang von der im Druckbehälter 5 enthaltenen Atmosphäre in die flüssige Metallphase gelangt ist. Der Stickstoffgehalt $[N\%]_{t2}$ der Metallschmelze am Ende des beobachteten Zeitraums berechnet sich dann zu

$$(3) \qquad [\%N]_{t2} = [\%N]_{t1} + \frac{m_Z * \dfrac{[\%N]_Z}{100} + \Delta V_{N2,Atm} * \dfrac{28}{22.4}}{m_{Schmelze}} * 100$$

Dabei sind mit "$[\%N]_{t1}$" bzw. "$[\%N]_{t2}$" die Stickstoffkonzentrationen im Metallbad am Anfang (Zeitpunkt $t_1$) bzw. am Ende (Zeitpunkt $t_2$) des beobachteten Zeitraums, mit "$m_Z$" die Zugabemenge und mit "$[\%N]_Z$" die Stickstoffkonzentration der eventuell zugegebenen stickstoffhaltigen Zusatzstoffe sowie mit "$m_{Schmelze}$" das Gewicht der Schmelze bezeichnet. Das über den Stoffübergang aus der Atmosphäre in das Schmelzenbad entsprechend Pfeil P gelangte Gasvolumen $\Delta V_{N2,Atm}$ läßt sich jedoch nicht einfach aus der Aussage von Gleichung (2) sowie der Konzentrationsänderung das Stickstoffs herleiten. Der Grund dafür besteht darin, daß die Konzentrationsabnahme auch das Resultat von Gasverlusten sein kann, welche durch Undichtigkeiten des Drucksystems entstehen. Dies ist ein wesentlicher Grund, warum bei der bisherigen, eingangs dieser Anmeldung erläuterten Verfahrensweise die im Bad gelöste Stickstoffmenge nicht exakt berechnet werden konnte.

Als wesentlicher Teil des Erfindungsgedankens wird daher der Gasverlust der Vorrichtung bestimmt. Dies erfolgt dadurch, daß zwischen zwei Zeitpunkten die Änderung der im Behälter enthaltenen Argonmasse durch die Messung des Gesamtdrucks sowie die Auswertung der quantitativen Argonanalyse ermittelt wird. Da Argon im Stahl nicht löslich ist, entspricht eine Abnahme der in der Atmosphäre enthaltenen Masse direkt dem Argonverlust in Folge von Undichtigkeiten des Behälters oder der Versorgungssysteme in diesem Zeitraum. Selbstverständlich sind dabei eventuell erfolgte Argonzugaben $\Delta V_{Ar,Zugabe}$ zu berücksichtigen. In erster Näherung kann in diesem Zusammenhang angenommen werden, daß der gleichzeitig eintretende Leckverlust $\Delta V_{N2,Verlust}$ an Stickstoff entsprechend dem mittleren Konzentrationsverhältnis der beiden Gase innerhalb des Zeitintervalls erfolgt:

$$(4) \quad \Delta V_{N2,Verlust} = \left[ \Delta V_{Ar,Zugabe} + \left( p_1 * \{\%Ar\}_1 - p_2 * \{\%Ar\}_2 \right) * \frac{V_B * 273}{100 * p_0 * T} \right] * \frac{\{\%N_2\}_1 + \{\%N_2\}_2}{\{\%Ar\}_1 + \{\%Ar\}_2}$$

Ist dieser Teil des Stickstoffverlusts aus Gleichung (4) bekannt, so kann jede darüber hinaus erfolgende Änderung der Stickstoffmasse als Folge des Stoffübergangs zwischen der Schmelze und der Gasatmosphäre ermittelt werden. Dieser Stoffübergang kann dabei selbstverständlich sowohl positiv wie auch negativ sein, d.h. die im Druckbehälter 5 enthaltene Atmosphäre liefert Stickstoff oder übernimmt ihn von der Schmelze, je nachdem, ob ihr Druck höher oder tiefer als die entsprechende Stickstoffaktivität der Schmelze ist. Das über den Stoffübergang aus der im Druckbehälter 5 enthaltene Atmosphäre in das Bad gelangte Stickstoffvolumen $\Delta V_{N2,Atm}$ kann entsprechend Gleichung (5) berechnet und in Gleichung (3) zur Bestimmung des momentanen Stickstoffgehalts im Bad eingesetzt werden:

$$(5) \qquad \Delta V_{N2,Atm} = \Delta V_{N2,Zugabe} - \Delta V_{N2,Verlust}$$

Mit Hilfe der erfindungsgemäßen Verfahrensweise kann der Stickstoffzubrand des Metallbads aus der Atmosphäre zu jedem Zeitpunkt angegeben werden. Daraus ergibt sich die Möglichkeit, mit Stickstoffdrücken oberhalb des Gleichgewichtsdrucks zu fahren, welcher sich entsprechend dem Sieverts-Gesetz aus Gleichung (1) ergibt. Dies führt einerseits zu einer Verkürzung der Aufstickungsdauer und andererseits zu einer Einsparung an stickstoffabgebenden Zusatzstoffen. Allerdings muß der Stickstoffpartialaldruck bei Erreichen der Sollwert-Konzentration in der Schmelze auf den Gleichgewichts-Druck zurückgeführt werden. Dieser Zeitpunkt kann jedoch aufgrund der oben beschriebenen Verfahrensweise exakt bestimmt werden.

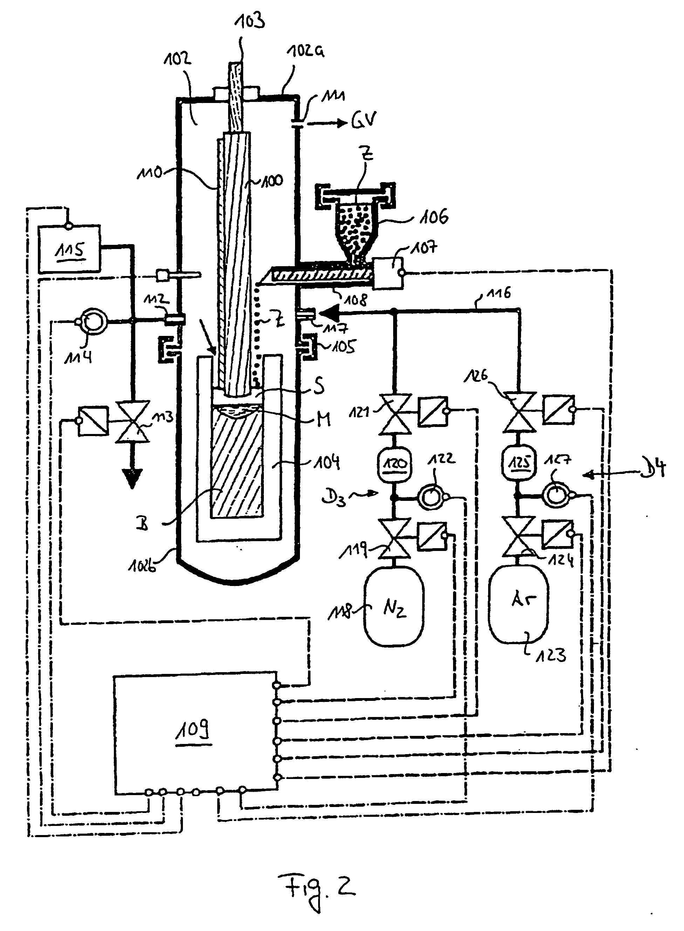

Fig. 2 zeigt ein anderes, besonders interessantes Anwendungsbeispiel einer erfindungsgemäßen Vorrichtung. Mit einer solchen Vorrichtung kann ein . Druck-Elektroschlackenumschmelzprozess (DESU) durchgeführt werden. Nach diesem Prozeß werden heute ein Großteil der hochaufgestickten Stähle industriell hergestellt. Bei allen Umschmelzverfahren ist eine im Verhältnis zum Gesamtumschmelzgewicht kleine flüssige stationäre Metallphase vorhanden, welche eine sehr kurze Durchlaufzeit hat. Aus diesem Grunde kann in der Regel davon ausgegangen werden, daß die flüssige Metallphase nicht ausreichend Zeit hat, um mit der Gasphase ins Gleichgewicht zu gelangen.

Bei der in Fig. 2 dargestellten Vorrichtung wird in bekannter Weise eine aus einer aufzustickenden Metallegierung gebildete Elektrode 100, welche mit einer durch eine Dichtung 101 in den oberen Teil 102a eines Druckbehälters 102 hineinragenden Schubstange 103 nach unten bewegt wird, bei Kontakt mit der hocherhitzten Schlacke S tropfenweise umgeschmolzen. Unterhalb der Schlacke S ist eine stationäre, flüssige Metallphase M vorhanden, welche fortlaufend in einer wassergekühlten Kokille 104 zu einem Block B erstarrt. Die wassergekühlte Kokille 104 befindet sich in einem unteren Druckbehälterteil 102b, welcher mit einem oberen Druckbehälterteil 102a über einen Flansch mit Preßring 105 druckfest verbunden ist.

Die in Fig. 2 dargestellte Vorrichtung besitzt des weiteren einen ersten Vorratsbehälter 106, aus dem mittels einer von einem Servomotor 107 angetriebenen Dosierschnecke 108 granulierte stickstoffabgebende Zusatzstoffe Z auf die Oberfläche der Schlacke S aufgebracht werden können. Die zeitliche Verteilung der Menge an zugegebenen Zusatzstoffen Z wird von einer Auswert- und Steuereinrichtung 109 auf die momentane Umschmelzleistung der Vorrichtung abgestimmt.

Gemäß dem Stand der Technik ist es jedoch auch möglich, eine Komposit-Elektrode mit einer stickstoffreichen Phase zu verwenden. Diese Alternative ist in Fig. 2 durch einen stangenförmigen Behälter 110 angedeutet, welcher stickstoffabgebende Zusatzstoffe enthält und im Beispiel seitlich an der Elektrode 100 befestigt ist. Nachteilig an der Verwendung einer Komposit-Elektrode der erläuterten Art ist jedoch, daß die Menge der stickstoffabgebenden Zusatzstoffe während des Umschmelzens nicht variiert werden kann.

Auch die in Fig. 2 dargestellte Vorrichtung besitzt unvermeidbare Undichtigkeiten, welche durch eine Öffnung 111 in der Wand des oberen Druckbehälterteils 102a symbolisch dargestellt sind. Über diese Undichtigkeit geht ein Gasvolumenstrom GV verloren.

Das durch die Undichtigkeiten verlorengehende Stickstoffvolumen kann auch im Fall der Vorrichtung gemäß Fig. 2 gemäß den Gleichungen (4) und (6) für einen betrachteten Zeitraum ermittelt werden. Der sich daraus ergebende Stickstoffübergang aus der im Druckbehälter 102 enthaltenen Atmosphäre in die flüssige Metallphase M muss jedoch in eine modifizierte Massenbilanz (3a) analog zur Gleichung (3) eingesetzt werden, weil für das stationäre Metallbad neben der Atmosphäre und der Menge der zugegebenen stickstoffhaltigen Zusatzstoffe auch die Elektrode als dritter Stickstofflieferant berücksichtigt werden muß:

$$(3a) \qquad [\%N]_{t2} = [\%N]_{t1} + \dfrac{m_Z * \dfrac{[\%N]_Z}{100} + m_{El} * \dfrac{[\%N]_{El}}{100} + \Delta V_{N2,Atm} * \dfrac{28}{22.4}}{m_{Schmelze}} * 100$$

Die Menge $m_{Schmelze}$ entspricht in diesem Beispiel dem Gewicht des im betrachteten Zeitintervall umgeschmolzenen Metalls.

Wie bei der Vorrichtung gemäß Fig. 1 weist der Druckbehälter 102 einen Anschluß 112 auf, über den mittels eines Ventils 113 bei Drucküberschreitung aus dem Druckbehälter 102 Gasatmosphäre abgelassen werden kann. Gleichzeitig ist an den Anschluß 112 ein Drucksensor 114 zur Erfassung des in dem Druckbehälter 102 vorhandenen Gesamtdrucks und eine Gasanlayse-Einrichtung 115 angeschlossen. Letztere ist als ein automatisierter Quadrupol-Massenspektrometer ausgeführt. Eine solche Einrichtung liefert neben den Gehalten an Stickstoff und Argon auch noch Informationen zu einer Reihe anderer in der Atmosphäre des Druckbehälters 102 enthaltener Gase, wie Wasserstoff und Wasserdampf, was für die Kontrolle des Wasserstoffgehalts in der Schmelze von Interesse sein kann. Die Meßergebnisse des Drucksensors 114 und der Gasanlasyse-Einrichtung 115 werden an die Auswert- und Steuereinrichtung 109 geliefert, welche ebenfalls über einen ihrer Steuerausgänge die Funktion des Ventils 113 steuert.

Bisher wurde angenommen, daß der Partialdruck des Stickstoffs oberhalb des Drucks liegt, welcher zur Erreichung des Sollwertgehalts in der Schmelze liegt. Wird in einer erfindungsgemäßen Vorrichtung ein zu niedriger Stickstoff-Partialdruck gefahren, so kann es, wie oben schon erwähnt, selbstverständlich auch zu einem Stoffübergang in der Gegenrichtung kommen. In diesem Fall verliert das Schmelzenbad M Stickstoff an die im Behälter enthaltene Atmosphäre, wodurch sich das Vorzeichen von $\Delta V_{N2,Atm}$ ändert. Ein Hinweis auf diesen Vorgang gibt eine Zunahme des Gesamtdrucks im betrachteten Zeitabschnitt bzw. eine Zunahme der bei der Gasanalyse festgestellten Stickstoffkonzentration.

Auch diese Effekte können wiederum durch eventuelle Undichtigkeitsverluste stark überlagert werden. Dennoch erlaubt das erfindungsgemäße Verfahren die Berechnung dieser Vorgänge in gleicher Weise über die Bilanz der inerten Gaskomponente.

Im Beispiel gemäß Fig. 2 wird das zugegebene Gasvolumen an Stickstoff und Argon mit hoher Genauigkeit durch zwei Dosiereinrichtungen D3 und D4 zugegeben. Die betreffenden Dosiereinrichtungen D3,D4 sind über eine gemeinsame Verbindungsleitung 116 mit einem weiteren Anschluß 117 des Druckbehälters 102 verbunden. Dabei umfaßt die Dosiereinrichtung D3 einen Druckspeicher 118, ein steuerbares Ventil 119 zum Verschließen des Druckspeichers 118, einen Dosierspeicher 120, ein Ventil 121 zum Verschließen des Dosierspeichers 120 gegenüber der Verbindungsleitung 116 sowie eine Druckmesszelle 122, welche den Druck in dem Dosierspeicher 120 erfaßt und als Meßsignal an die Auswert- und Steuereinrichtung 109 weitergibt. Die Steuereingänge der Ventile 119 und 121 sind ebenfalls mit der Auswert- und Steuereinrichtung 109 verbunden.

Um Stickstoff aus dem Druckspeicher 118 in den Druckbehälter 102 zu leiten, wird zunächst das Ventil 119 bei geschlossenem Ventil 120 geöffnet, so daß StickstoffGas in den Dosierspeicher 120 strömt. Nach einer bestimmten Zeit wird das Ventil 119 anschließend geschlossen und der erreichte Druck in dem Dosierspeicher 120 mittels der Druckmesszelle 122 erfaßt.

Nach Öffnung des Ventils 121 kann dann der Stickstoff über die Leitung 116 in den Druckbehälter 102 abströmen. Nach Schliessung des Ventils 121 wird der Druck im Dosierspeicher 120 nochmals gemessen. Aus der Druckdifferenz wird dann unter Berücksichtigung des Dosiervolumens und eventuell durch zusätzliche Messung der Temperatur die in den Druckbehälter eingelassene Stickstoffmenge mit hoher Genauigkeit bestimmt.

In gleicher Weise ist die Dosiereinrichtung D4 ausgebildet, über welche ein Inertgas, vorzugsweise Argon in die Atmosphäre im Druckbehälter 102 dosiert werden kann. So weist die Dosiereinrichtung D4 einen Druckspeicher 123, ein den Druckspeicher 123 verschließendes Ventil 124, einen Dosierspeicher 125, ein den Dosierspeicher 125 verschließendes Ventil 126 und eine Druckmesszelle 127 auf, die den im Dosierspeicher 125 vorhandenen Druck erfaßt. Falls der bei der Vorrichtung gewählte Gesamtdruck frühzeitig erreicht wird, kann das Ventil 126 frühzeitig vor völliger Entleerung des Dosierspeichers geschlossen werden.

Für die Steuerung des Umschmelzprozesses ist es von besonderer Bedeutung, die Stoffübergangsbedingungen zu kennzeichnen, unter denen der Stickstoff aus der Atmosphäre in das Schmelzenbad übergeht. Aus den quasi-stationären Bedingungen im betrachteten Zeitintervall ist die Menge des aus der Atmosphäre in das Bad eingebrachten Stickstoffs bekannt. Ferner ist neben dem momentanen Partialdruck des Stickstoffs $P_{ist}$ aus dem Gesamtdruck P und der durch die Gasanalyse ermittelten Stickstoffkonzentration auch der Ist-Gehalt des Stickstoffs im Schmelzenbad entsprechend Gleichung (3a) bekannt. Damit kann ein Stoffübergangskoeffizient k für den quasi-stationären Stickstofftransport im betrachteten Zeitraum entsprechend einem geeigneten Stoffübergangsmodell aus dem Konzentrationsgradienten berechnet werden. Als stoffübergangshemmendes Hindernis kann dabei sowohl die Schlacke S als auch die Grenzfläche der Metallphase M angenommen werden. In beiden Fällen kann näherungsweise ein Modell mit unbewegter Grenzschicht verwendet werden, z.B. entsprechend Nemst-Brunner, d.h. innerhalb der Schlacken- und Metallphase liegt Konvektion vor, jedoch in unmittelbarer Nähe der Phasengrenze befinden sich stagnierende Grenzschichten auf beiden Seiten, welche nur durch Diffusion vom Stickstoff überwunden werden können. In einem solchen Fall ergibt sich ein Ansatz für die Menge des durchtretenden Stickstoffs $m_{N,Atm}$ gemäss der folgenden Gleichung (6):

$$(6) \quad m_{N,Atm} = \Delta V_{N2,Atm} * \frac{28}{22.4} = k * \frac{A}{V} * \Delta t * \left( K_s * \sqrt{\frac{P_{N2,Ist}}{P_0}} - [\%N]_{ist} \right)$$

Dabei ist A die für den Stoffübergang zur Verfügung stehende Fläche und V das Volumen des flüssigen Metallbads M. Wird beabsichtigt, die Zugabe der stickstoffabgebenden Zusatzstoffe zu ändern, z.B. im Idealfall auf Null zurückzuführen, so ergibt sich in der Bilanz der Gleichung (3a) zur Erreichung des Sollwerts ein entsprechender Mehrbedarf für die Zulieferung von Stickstoff aus der Atmosphäre, was einer entsprechenden Änderung der durchtretenden Stickstoffmenge und damit einem geänderten Wert des Sollwerts des Stickstoff-Partialdrucks entspricht. Dieser kann unter Benutzung des durch Umstellung von Gleichung (6) ermittelten Stoffübergangskoeffizienten W berechnet werden, welcher Fläche und Volumen der geometrischen Anordnung enthält:

$$(7) \qquad P_{N2,Soll} = \left( \frac{\frac{\Delta m_{N,soll}}{k'\Delta t} + [\%N]_{Soll}}{K_s} \right)^2$$

In Gleichung (7) kann das Soll-Angebot $P_{N2,Soll}$ an Stickstoff entsprechend einer reduzierten Menge an stickstoffhaltigen Zusatzstoffen zusammen mit dem angestrebten Stickstoff-Sollwertgehalt der Schmelze vorgegeben werden. Unter Berücksichtigung des empirisch aus dem Umschmelzvorgang berechneten Stoffübergangskoeffizient W sowie der Sieverts-Konstanten Ks für die Legierung kann dann der für diesen Fall nötige Sollwert-Partialdruck des Stickstoffs berechnet werden. Übersteigt dieser Druck den maximal für die Vorrichtung zulässigen Arbeitsdruck, was dem Verhalten einer schlecht für den Stickstoff durchlässigen Grenzschicht entspricht, dann muß der Restbedarf aus stickstoffabgebenden Zusatzstoffen gedeckt werden.

Das Zeitintervall für die obengenannten Betrachtungen muß mindestens so lange gewählt werden, daß sich im Rahmen der Meßabweichungen von Druck, Gaskonzentrationen und Temperatur signifikante Änderungen mit minimalem Fehler bei den zu bestimmenden Größen ergeben. In der Praxis hat sich ein Zeitintervall von 5 - 10 Minuten als geeignet erwiesen, d.h. der entsprechend dem erfindungsgemäßen Verfahren berechnete Stickstoffgehalt stimmt in der Regel auf ± 0.02 m-% mit dem später tatsächlich im Block analytisch bestimmten Stickstoffgehalt überein.

Das erfindungsgemäße Verfahren kann grundsätzlich "manuell" gefahren werden, falls die für die Durchführung des erfindungsgemäßen Verfahrens benötigen Prozeßdaten, wie umgeschmolzene Stahlmenge, Gesamtdruck in der Anlage, Konzentrationen der Gase, die Mengen der zugegebenen stickstoffhaltigen Zusatzstoffe sowie die im Zeitintervall jeweils zugegebenen Normalvolumina von Stickstoff und Argon zur Verfügung stehen.

Mit besonderem Vorteil können die Auswert- und Steuervorgänge jedoch in automatisiert werden, indem sowohl die Auswertung als auch die für die Steuerung der Vorrichtung erforderlichen Berechnungen von der Auswertund Steuereinrichtung durchgeführt werden. Gleichzeitig kann eine derart ausgebildete Auswert- und Steuereinrichtung bestimmten, vorgegebenen Fahrweisen bzw. Prozeßführungen folgen, die hinsichtlich der jeweils verarbeiteten Metallegierung und des angestrebten Arbeitsergebnisses optimiert sind.

Eine solche Fahrweise kann dabei darin bestehen, daß der Steuerung eine fixe Zugabemenge von stickstoffabgebenden Zusatzstoffen vorgegeben wird, worauf sie den Druck für den zu erreichenden Stickstoffgehalt anpaßt. Eine zweite Fahrweise kann darin bestehen, daß die Steuerung bestrebt ist, einen Sollwert des Stickstoffgehalts mit der Mindestmenge an Stickstoff aus stickstoffabgebenden Zusatzstoffen zu erzeugen. Die Steuerung berechnet dabei den maximalen Stickstoff-Partialdruck, welcher innerhalb des zugelassenen Druckbereichs der Anlage gefahren werden darf. Liegt der errechnete Druck zu hoch, so wählt die Steuerung den gerade noch zulässigen Druck und deckt den verbleibenden Stickstoffbedarf aus der damit auf ein Minimum reduzierten Menge von stickstoffabgebenden Zusatzstoffen.

In allen Fällen besteht der wesentliche Vorteil des erfindungsgemäßen Verfahrens darin, daß die Anlage, ausgehend von einer gegebenen Ausgangssituation und entsprechend einer vom Betreiber vorgegebenen Fahrweise, selbständig in der Lage ist, den idealen quasi-stationären Endzustand in einer kurzen Folge von immer genauer werdenden Schritten zu erreichen. Während des Umschmelzvorgangs eintretende Veränderungen der Betriebsparameter werden gleichfalls registriert und durch entsprechende Veränderung der Stickstoffkonzentration sowie der Zugabemenge von Zusatzstoffen korrigiert. Als Nebenprodukte werden wichtige verfahrenstechnische Kenngrössen, wie die Stickstofflöslichkeit der Legierung, der Stoffübergangskoeffizient unter konkreten Betriebsbedingungen sowie eine laufende Diagnose der Undichtigkeit der Anlage geliefert. Die auf diese Weise gewonnenen Daten können statistisch ausgewertet und zur Optimierung der empirisch ermittelten Rechengrößen und Korrelationen des Steuerprogramms genutzt werden

| **BEZUGSZEICHEN** | | | |
|---|---|---|---|
| Fig. 1: | | | |
| 3 | Induktionstiegel | 17 | Druckspeicher |
| 4 | Induktionsspule | 18 | Ventil |

(fortgesetzt)

| BEZUGSZEICHEN | | | |
|---|---|---|---|
| Fig. 1: | | | |
| 5 | Druckbehälter | 19 | Strömungsdrossel |
| 5a | unterer Teil | 20 | Massendurchflußmesser |
| 5b | Mittelteil | 21 | Ventil |
| 5d | Trennwand | 22 | Druckmesszelle |
| 5e | zentrale Öffnung | 23 | Vorratsbehälter |
| 5f | Oberteil | 24 | Förderschnecke |
| 5g,5h | Anschlüsse | 25 | Gasanalysator |
| 6 | Preßrings | 26 | Temperaturfühler |
| 7 | Ventilplatte | | |
| 8 | Bewegungsmechanismus | D1,D2 | Dosiereinrichtungen |
| 9 | Aktuator | GV | Gasverlustströmung |
| 10 | Preßrings | L | Loch |
| 11 | Verbindungsleitung | M | Metallschmelze |
| 12 | Druckspeicher | P | Pfeil |
| 13 | Ventil | S | Schlacke |
| 14 | Strömungsdrossel | Z | Zusatzstoff |
| 15 | Massendurchflußmesser | | |
| 16 | Steuereinrichtung | | |

| BEZUGSZEICHEN | | | |
|---|---|---|---|
| Fig.2: | | | |
| 100 | Elektrode | 116 | Verbindungsleitung |
| 101 | Dichtung | 117 | Anschluß |
| 102a | oberer Teil | 118 | Druckspeicher |
| 102 | Druckbehälters | 119 | Ventil |
| 103 | Schubstange | 120 | Dosierspeicher |
| 104 | Kokille | 121 | Ventil |
| 104 | Kokille | 122 | Druckmesszelle |
| 102b | Druckbehälterteil | 123 | Druckspeicher |
| 105 | Preßring | 124 | Ventil |
| 106 | Vorratsbehälter | 125 | Dosierspeicher |
| 107 | Servomotor | 126 | Ventil |
| 108 | Dosierschnecke | 127 | Druckmesszelle |
| 109 | Auswert-/Steuereinrichtung | | |
| 110 | Behälter | B | Block |
| 111 | Öffnung | D3,D4 | Dosiereinrichtungen |
| 112 | Anschluß | GV | Gasvolumenstrom |
| 113 | Ventil | M | Metallphase |
| 114 | Drucksensor | S | Schlacke |
| 115 | Gasanlayse-Einrichtung | Z | Zusatzstoffe |

**Patentansprüche**

1. Verfahren zum Erzeugen einer Metallegierung, bei dem der Metallegierung in einem Behälter unter Überdruck ein bestimmter, gewünschter Gehalt an einer im Normalzustand gasförmigen Legierungskomponente zugeführt wird, wobei

- der in dem Behälter enthaltenen Atmosphäre die gasförmige Legierungskomponente und ein Inertgas in solchen Mengen zugegeben werden, daß in der Atmosphäre ein bestimmtes anfängliches Konzentrationsverhältnis zwischen der gasförmigen Legierungskomponente und dem Inertgas besteht,
- die zeitliche Veränderung des Gesamtdrucks, die zeitliche Veränderung der Konzentration des Inertgases und der gasförmigen Legierungskomponente in der im Behälter enthaltenen Atmosphäre sowie die zeitliche Veränderung der mittleren Gastemperatur der in dem Behälter enthaltenen Atmosphäre ermittelt werden,
- unter Berücksichtigung des jeweiligen Gesamtdrucks, der jeweiligen Konzentration des Inertgases, der jeweiligen Konzentration der gasförmigen Legierungskomponente sowie der jeweiligen Gastemperatur der in Folge von Undichtigkeiten des Behälters eintretende Inertgas-Massenverlust der im Behälter enthaltenen Atmosphäre ermittelt wird,
- anhand des anfänglichen Konzentrationsverhältnisses ein theoretischer Massenverlust der Atmosphäre an der gasförmigen Legierungskomponente bestimmt wird, welcher sich aufgrund der Undichtigkeiten einstellt,
- anhand eines Vergleichs des theoretischen Massenverlusts mit dem tatsächlichen Massenverlust, welcher unter Berücksichtigung der jeweiligen tatsächlichen Konzentration der gasförmigen Komponente in der im Behälter enthaltenen Atmosphäre festgestellt wird, der Massenanteil der gasförmigen Komponente ermittelt wird, der in die Metallegierung übergegangen ist, und
- der in dem Behälter enthaltenen Atmosphäre unter Berücksichtigung des in die Metallegierung übergegangenen Massenanteils und der durch Undichtigkeiten verlorenen Massenverluste der gasförmigen Legierungskomponente diese Legierungskomponente so lange und in solchen Mengen zudosiert wird, daß nach Beendigung des Verfahrens die Metallegierung den gewünschten Gehalt an der gasförmigen Legierungskomponente besitzt.

2. Verfahren nach Anspruch 1, **dadurch gekennzeichnet, daß** durch die Zudosierung der gasförmigen Legierungskomponente ein bestimmter Gesamtdruck und ein bestimmter Partialdruck der gasförmigen Legierungskomponente aufrechterhalten werden.

3. Verfahren nach einem der voranstehenden Ansprüche, **dadurch gekennzeichnet, daß** zusätzlich zu der gasförmigen Legierungskomponente Inertgas zudosiert wird.

4. Verfahren nach einem der voranstehenden Ansprüche, **dadurch gekennzeichnet, daß** die Zudosierung der gasförmigen Legierungskomponente unabhängig von dem Inertgas erfolgt.

5. Verfahren nach einem der voranstehenden Ansprüche, **dadurch gekennzeichnet, daß** die Zudosierung der gasförmigen Komponente mittels fester, die gasförmige Komponente in gebundener Form enthaltener Partikel erfolgt, welche bei Erhitzung die gasförmige Legierungskomponente in einer bekannten Konzentration freisetzen.

6. Verfahren nach einem der voranstehenden Ansprüche, **dadurch gekennzeichnet, daß** die mittlere Gastemperatur ermittelt wird, indem die Temperatur der im Behälter enthaltenen Atmosphäre an mindestens einem Ort gemessen wird und ausgehend von dieser gemessenen Temperatur unter Berücksichtigung einer zuvor empirisch ermittelten Korrelation die mittlere Gastemperatur ermittelt wird.

7. Verfahren nach einem der Ansprüche 1 bis 5, **dadurch gekennzeichnet, daß** die mittlere Gastemperatur anhand eines Druckanstieges ermittelt wird, der in dem Behälter durch eine kurzzeitige Zugabe eines bekannten Inertgasvolumens ausgelöst wird.

8. Verfahren nach einem der voranstehenden Ansprüche, **dadurch gekennzeichnet, daß** die gasförmige Komponente Stickstoff ist.

9. Verfahren nach einem der voranstehenden Ansprüche, **dadurch gekennzeichnet, daß** das Inertgas Argon ist.

10. Verfahren nach einem der voranstehenden Ansprüche, **dadurch gekennzeichnet, daß** die Metallegierung eine Stahllegierung ist.

11. Verfahren nach einem der Ansprüche 5 bis 10, **dadurch gekennzeichnet, daß** die festen Partikel pulver- oder granulatförmig zudosiert werden.

12. Verfahren nach Anspruch 11, **dadurch gekennzeichnet, daß** die festen Partikel durch ein Metallnitrid oder -carbonitrid gebildet sind.

**13.** Verfahren nach Anspruch 12, **dadurch gekennzeichnet, daß** die Partikel Siliziumnitrid, Chromnitrid, Mangannitrid und / oder Kalkstickstoff enthalten.

**14.** Verfahren nach einem der voranstehenden Ansprüche, **dadurch gekennzeichnet, daß** die Metallegierung in fester Form in den Behälter eingebracht und **daß** in dem Behälter ein Umschmelzprozeß durchgeführt wird.

**15.** Verfahren nach Anspruch 14, **dadurch gekennzeichnet, daß** der Umschmelzprozeß als Elektrolichtbogen- oder Elektroschlackenumschmelzprozeß durchgeführt wird.

**16.** Verfahren nach einem der Ansprüche 14 oder 15, **dadurch gekennzeichnet, daß** das pro Zeiteinheit umgeschmolzene Volumen der Metallegierung erfaßt wird und bei der Ermittlung der zudosierten Menge der gasförmigen Legierungskomponente berücksichtigt wird.

**17.** Vorrichtung zur Durchführung des Verfahrens gemäß einem der Ansprüche 1 bis 16

- mit einem Behälter zur Aufnahme einer Atmosphäre und einer Metallegierung unter Überdruck,
- mit einer Erwärmungseinrichtung, mittels der aus der Metallegierung eine Schmelze erzeugbar ist,
- mit einer Dosiereinrichtung zum Einbringen einer im Normalzustand gasförmigen Legierungskomponente in den Behälter,
- mit einer Dosiereinrichtung zum Einbringen eines Inertgases in den Behälter,
- mit einem Drucksensor zum Erfassen des Gesamtdrucks der in dem Behälter enthaltenen Atmosphäre,
- mit einem Temperatursensor zum Erfassen der Temperatur der Atmosphäre an mindestens einem Ort,
- mit einer Einrichtung zur Ermittlung der Konzentrationen des Inertgases und der gasförmigen Legierungskomponente in der im Behälter enthaltenen Atmosphäre,
- mit einer Auswerteinheit, welche den Gesamtdruck, die Temperatur der Atmosphäre und die Konzentrationen des Inertgases und der gasförmigen Legierungskomponente auswertet und den in Folge von Undichtigkeiten des Behälters eintretenden Inertgas-Masseverlust, sowie anhand des anfänglichen Konzentrations verhältnisses den in Folge von Undichtigkeiten des Behälters eintretenden theoretischen Masseverlust an der gasförmigen Legierungskomponente ermittelt und anhand eines Vergleichs des theoretischen Massenverlustes mit dem tatsächlichen Massenverlust der Massenanteil der in die Metallegierung übergegangeren gasförmigen legierungskomponente ermittelt, sowie
- mit einer Steuereinrichtung, welche die Dosierung des Inertgases und der gasförmigen Legierungskomponente in Abhängigkeit vom Ergebnis der Auswertung der Auswerteinrichtung steuert.

**18.** Vorrichtung nach Anspruch 17, **dadurch gekennzeichnet, daß** ein Ventil zum Ablassen der in dem Behälter enthaltenen Atmosphäre vorgesehen ist.

**19.** Vorrichtung nach einem der Ansprüche 17 oder 18, **dadurch gekennzeichnet, daß** die Erwärmungseinrichtung nach Art eines Induktionsoder Lichtbogenofens ausgebildet ist.

**20.** Vorrichtung nach einem der Ansprüche 17 bis 19, **dadurch gekennzeichnet, daß** eine Dosiereinrichtung zum Einbringen von festen Partikeln in den Behälter vorgesehen ist.

**21.** Vorrichtung nach Anspruch 20, **dadurch gekennzeichnet, daß** eine Einrichtung zur Erfassung der von der Dosiereinrichtung in den Behälter eingebrachten Menge an Partikeln vorgesehen ist und **daß** die Auswerteinrichtung die eingebrachte Menge bei der von ihr durchgeführten Auswertung berücksichtigt.

**22.** Vorrichtung nach einem der Ansprüche 17 bis 21, **dadurch gekennzeichnet, daß** eine Meßeinrichtung vorgesehen ist, welche das erschmolzene Volumen der in dem Behälter enthaltenen Metalliegerung erfaßt, und **daß** die Auswerteinrichtung den von der Meßeinrichtung ermittelten Wert bei der von ihr durchgeführten Auswertung berücksichtigt.

**Claims**

**1.** A method for producing a metal alloy, in which in a vessel at overpressure a certain desired content of an alloying constituent which is gaseous in its normal state, is fed to said metal alloy, wherein

- the gaseous alloying constituent and an inert gas are added in such quantities to the atmosphere contained in the vessel that a particular initial concentration ratio between the gaseous alloying constituent and the inert gas exists in the atmosphere;

- the change over time in the gas pressure, the change over time in the concentration of the inert gas and in the gaseous alloying constituent in the atmosphere contained in the vessel, as well as the change over time in the mean gas temperature of the atmosphere contained in the vessel, are determined;

- taking into account the respective total pressure, the respective concentration of the inert gas, the respective concentration of the gaseous alloying constituent, as well as the respective gas temperature, the inert gas mass loss occurring as a result of lack of tightness of the vessel, of the atmosphere contained in the vessel, is determined;

- by means of the initial concentration ratio a theoretical mass loss of the gaseous alloying constituent in the atmosphere is determined, said mass loss being the result of lack of tightness;

- by means of a comparison of the theoretical mass loss with the actual mass loss which is determined taking into account the respective actual concentration of the gaseous component in the atmosphere contained in the vessel, the mass fraction of the gaseous component which has made the transfer to the metal alloy is determined; and

- taking into account the mass fraction which has made the transfer to the metal alloy and the mass losses of the gaseous alloying constituent which have been lost by lack of tightness, this alloying constituent is admixed to the atmosphere contained in the vessel for such a period of time and in such quantities that after completion of the process, the metal alloy has the desired content of the gaseous alloying constituent.

2. A method according to claim 1, **characterised in that** by metered addition of the gaseous alloying constituent a certain total pressure and a certain partial pressure of the gaseous alloying constituent are maintained.

3. A method according to one of the preceding claims, **characterised in that** in addition to the gaseous alloying constituent, inert gas is added by metering.

4. A method according to one of the preceding claims, **characterised in that** metered addition of the gaseous alloying constituent takes place irrespective of the inert gas.

5. A method according to one of the preceding claims, **characterised in that** metered addition of the gaseous component takes place by means of solid particles which contain the gaseous component in a bound form, with said particles when exposed to heat, releasing the gaseous alloying constituent at a known concentration.

6. A method according to one of the preceding claims, **characterised in that** the mean gas temperature is determined by measuring the temperature of the atmosphere contained in the vessel at least in one location, and on the basis of this measured temperature taking into account a previously empirically determined correlation, the mean gas temperature is determined.

7. A method according to one of claims 1 to 5, **characterised in that** the mean gas temperature is measured by means of a rise in pressure which is triggered in the vessel by a temporary addition of a known inert gas volume.

8. A method according to one of the preceding claims, **characterised in that** the gaseous component is nitrogen.

9. A method according to one of the preceding claims, **characterised in that** the inert gas is argon.

10. A method according to one of the preceding claims, **characterised in that** the metal alloy is a steel alloy.

11. A method according to one of claims 5 to 10, **characterised in that** the solid particles are added by metering in the form of powder or granulate.

12. A method according to claim 11, **characterised in that** the solid particles are formed by a metal nitride or metal carbonitride.

**13.** A method according to claim 12, **characterised in that** the particles contain silicon nitride, chromium nitride, manganese nitride and/or lime-nitrogen.

**14.** A method according to one of the preceding claims, **characterised in that** the metal alloy is placed in the vessel in solid form and **in that** a remelting process is carried out in the vessel.

**15.** A method according to claim 14, **characterised in that** the remelting process is carried out as an electroarc refining process or an electroslag refining process.

**16.** A method according to one of claims 14 or 15, **characterised in that** the volume of the metal alloy remelted per unit of time is registered and taken into account when determining the quantity of the gaseous alloying constituent added by metering.

**17.** A device for implementing the method according to one of claims 1 to 16, comprising

- a vessel for containing an atmosphere and a metal alloy at overpressure;

- a heating device by means of which a melt can be generated from the metal alloy;

- a metering device for feeding into the vessel an alloying constituent which in its normal state is gaseous;

- a metering device for feeding an inert gas into the vessel;

- a pressure sensor for registering the total pressure of the atmosphere contained in the vessel;

- a temperature sensor for registering the temperature of the atmosphere in at least one location;

- a device for determining the concentrations of the inert gas and the gaseous alloying constituent in the atmosphere contained in the vessel;

- an evaluation unit which evaluates the total pressure, the temperature of the atmosphere and the concentrations of the inert gas and the gaseous alloying constituent, that determines the inert gas mass loss that occurs as a result of leakinesses of the vessel as well as, on the basis of the initial concentration ratio, the theoretical mass loss of the gaseous alloying component that occurs as a result of leakinesses of the vessel, and by means of a comparison of the theoretical mass loss and the actual mass loss determines the mass proportion of the gaseous alloying component that has passed into the metal alloy and

- a control device which controls the metering of the inert gas and the gaseous alloying constituent depending on the result of the evaluation of the evaluation device.

**18.** A device according to claim 17, **characterised in that** a valve for releasing the atmosphere contained in the vessel is provided.

**19.** A device according to one of claims 17 or 18, **characterised in that** the heating device is designed in the way of an induction furnace or an electric arc furnace.

**20.** A device according to one of claims 17 to 19, **characterised in that** a metering device for feeding solid particles into the vessel is provided.

**21.** A device according to claim 20, **characterised in that** a device for registering the quantity of particles fed into the vessel by the metering device is provided, and **in that** during its evaluation, the evaluation device takes into account the quantity fed in.

**22.** A device according to one of claims 17 to 21, **characterised in that** a measuring device is provided which registers the melted volume of the metal alloy contained in the vessel, and **in that** during its evaluation, the evaluation device takes into account the value determined by the measuring device.

**Revendications**

1. Procédé pour la réalisation d'un alliage métallique dans le cadre duquel un certain pourcentage désiré de composant d'alliage, gazeux à l'état normal, est ajouté à l'alliage métallique, dans un conteneur sous pression,

   - le composant d'alliage gazeux et un gaz inerte étant ajoutés à l'atmosphère régnant dans le conteneur, en quantités telles que le composant d'alliage gazeux et le gaz inerte soient contenus dans l'atmosphère dans un rapport de concentrations initial déterminé,
   - la modification dans le temps de la pression totale, la modification dans le temps de la concentration du gaz inerte et du composant d'alliage gazeux dans l'atmosphère régnant dans le conteneur, ainsi que la modification dans le temps de la température moyenne du gaz de l'atmosphère régnant dans le conteneur étant déterminées,
   - la perte de masse du gaz inerte de l'atmosphère comprise dans le conteneur se produisant à la suite de défauts d'étanchéité du conteneur étant déterminée, compte tenu de chaque pression globale, de chaque concentration du gaz inerte, de chaque concentration du composant d'alliage gazeux, ainsi que de chaque température du gaz,
   - sur la base du rapport de concentrations initial, une perte de masse théorique de l'atmosphère, résultant de défauts d'étanchéité du conteneur, étant déterminé au niveau du composant d'alliage gazeux,
   - sur la base d'une comparaison de la perte de masse théorique avec la perte de masse réelle, constatée en tenant compte de chaque concentration réelle du composant gazeux dans l'atmosphère régnant dans le conteneur, le pourcentage de masse du composant gazeux passé dans l'alliage métallique étant déterminé,
   - compte tenu du pourcentage de masse passé dans l'alliage métallique et de la perte de masse du composant gazeux, à la suite de défauts d'étanchéité du conteneur, ledit composant d'alliage gazeux étant ajouté à l'atmosphère régnant dans le conteneur aussi longtemps et en doses telles que l'alliage métallique contienne, à la fin du processus, le pourcentage désiré de composant d'alliage gazeux.

2. Procédé selon la revendication 1, **caractérisé en ce que**, par addition dosée du composant d'alliage gazeux, une pression globale définie et une pression partielle du composant d'alliage gazeux définie sont maintenues.

3. Procédé selon l'une des revendications précédentes, **caractérisé en ce qu'**un gaz inerte, dosé, est ajouté en plus du composant d'alliage gazeux.

4. Procédé selon l'une des revendications précédentes, **caractérisé en ce que** l'addition dosée du composant d'alliage gazeux est effectuée indépendamment du gaz inerte.

5. Procédé selon l'une des revendications précédentes, **caractérisé en ce que** l'addition dosée est effectué au moyen de particules solides contenant le composant gazeux sous une forme liée, lesquelles particules libèrent, lors du chauffage, le composant d'alliage gazeux dans une concentration connue.

6. Procédé selon l'une des revendications précédentes, **caractérisé en ce que** la température moyenne du gaz est déterminée en mesurant à un endroit au moins la température de l'atmosphère comprise dans le conteneur et en déterminant la température moyenne du gaz sur la base de cette température mesurée, compte tenu d'une corrélation déterminée auparavant de manière empirique.

7. Procédé selon l'une des revendications 1 à 5, **caractérisé en ce que** la température moyenne du gaz est déterminée sur la base d'une élévation de la pression qui est provoquée dans le conteneur par un bref apport d'un volume connu de gaz inerte.

8. Procédé selon l'une des revendications précédentes, **caractérisé en ce que** le composant gazeux est l'azote.

9. Procédé selon l'une des revendications précédentes, **caractérisé en ce que** le gaz inerte est l'argon.

10. Procédé selon l'une des revendications précédentes, **caractérisé en ce que** l'alliage métallique est un alliage d'acier.

11. Procédé selon l'une des revendications 5 à 10, **caractérisé en ce que** les particules solides, dosées, sont ajoutées sous la forme de poudre ou de granulé.

**12.** Procédé selon la revendication 11, **caractérisé en ce que** les particules solides sont formées par un nitrure métallique ou un carbonitrure métallique.

**13.** Procédé selon la revendication 12, **caractérisé en ce que** les particules solides contiennent du nitrure de silicium, du nitrure de chrome, du nitrure de manganèse et / ou du cyanamide calcique.

**14.** Procédé selon l'une des revendications précédentes, **caractérisé en ce que** l'alliage métallique est introduit dans le conteneur sous une forme de solide et qu'un processus de fusion est effectué dans ledit conteneur.

**15.** Procédé selon la revendication 14, **caractérisé en ce que** le processus de fusion est exécuté selon un procédé de fusion à l'arc ou selon un procédé de fusion sous laitier électroconducteur.

**16.** Procédé selon l'une des revendications 14 ou 15, **caractérisé en ce que** le volume d'alliage métallique fondu par unité de temps est détecté et est pris en considération lors de la détermination de la quantité dosée de composant d'alliage gazeux.

**17.** Dispositif pour l'exécution du procédé selon les revendications 1 à 16,

- avec un conteneur pour la réception d'une atmosphère et d'un alliage métallique sous pression,
- avec un dispositif de chauffage, au moyen duquel une fonte peut être réalisée à partir de l'alliage métallique,
- avec un dispositif de dosage pour l'apport d'un gaz inerte dans le conteneur,
- avec un capteur de pression pour détecter la pression globale de l'atmosphère comprise dans le conteneur,
- avec un capteur de température pour détecter la température de l'atmosphère à un endroit au moins,
- avec un dispositif d'évaluation qui estime la pression globale, la température de l'atmosphère et les concentrations du gaz inerte et du composant d'alliage gazeux et détermine la perte de masse du gaz inerte, se produisant à la suite de défauts d'étanchéité du conteneur, et détermine, sur la base d'une comparaison établie entre la perte de masse théorique et la perte en masse réelle, le pourcentage en masse du composant d'alliage gazeux, absorbé par l'alliage métallique, ainsi
- qu'avec un dispositif de commande qui commande le dosage du gaz inerte et du composant d'alliage gazeux, en dépendance du résultat de l'évaluation réalisée par le dispositif d'évaluation.

**18.** Dispositif selon la revendication 17, **caractérisé en ce qu'**une soupape est prévue pour évacuer l'atmosphère contenue dans le conteneur.

**19.** Dispositif selon la revendication 17 ou 18, **caractérisé en ce que** le dispositif de chauffage est conçu à la manière d'un four à induction ou d'un four à arc.

**20.** Dispositif selon l'une des revendications 17 à 19, **caractérisé en ce qu'**un dispositif de dosage est prévu pour l'apport de particules solides dans le conteneur.

**21.** Dispositif selon la revendication 20, **caractérisé en ce qu'**est prévu un dispositif de détection de la quantité de particules introduite dans le conteneur par le dispositif de dosage, et que le dispositif d'évaluation prend en considération la quantité introduite, lors de son évaluation.

**22.** Dispositif selon l'une des revendications 17 à 21, **caractérisé en ce qu'**il est prévu un dispositif de mesure qui détermine le volume de fonte de l'alliage métallique en fusion contenu dans le conteneur, et que le dispositif d'évaluation prend en considération la valeur déterminée par le dispositif de mesure, lors de son évaluation.

Fig. 1

Fig. 2